# EUROPEAN PATENT APPLICATION

(11) **EP 2 584 519 A1**
(43) Date of publication of application: **24.04.2013**
(21) Application number: 12777263.0
(22) Date of filing: 27.02.2012
(51) Int. Cl.: G06Q 30/02

(54) **PURCHASING ADMINISTRATION DEVICE, PURCHASING ADMINISTRATION METHOD, PURCHASING ADMINISTRATION PROGRAM, AND STORAGE MEDIUM**

(30) Priority: 28.04.2011 JP 2011102277
(71) Applicant: Rakuten, Inc., Tokyo 140-0002 (JP)
(72) Inventor: UMEDA Takashi, Tokyo 140-0002 (JP)
(74) Representative: Price, Christopher
(86) International application number: PCT/JP2012/054806
(87) International publication number: WO 2012/147405

(57) **Abstract**

A purchase management apparatus (1) notifies a target user having purchased a first item about next purchase timing. The apparatus (1) can refer to a purchase history DB (20) associating user ID and purchase history records, and an item DB (21) associating item ID and category ID. The apparatus (1) acquires user ID of a target user from the purchase history DB (20), specifies a category using the category ID of the category to which the first item belongs, calculates a purchase interval of the items belonging to the category based on the purchase history record specified using the target user ID among the purchase history records of the items belonging to the category, and estimates a purchase interval of the first item based on the calculated purchase interval. The purchase interval of the first item with no purchase history can be thereby estimated based on the known purchase history.

## Description

### Technical Field

Various aspects and embodiments of the present invention relate to a purchase management apparatus, a purchase management method, a purchase management program and a storage medium.

### Background Art

A purchase management apparatus that makes a notification to promote the purchase of an item has been known (for example, see Patent Literature 1). The device described in Non Patent Literature 1 calculates the purchase interval of the same item that has been purchased a plurality of times by a user based on purchase history information of the user and, when the purchase interval of the item from the latest date of purchase has elapsed at the current date, the device makes a notification to promote the purchase of the item to the user.

### Citation List

### Patent Literature

PTL 1: Japanese Unexamined Patent Application Publication No. H09-160991

### Summary of Invention

### Technical Problem

However, in the device disclosed in Patent Literature 1, a notification to promote the purchase cannot be made at appropriate time for an item purchased only once by a user.

In this technical field, it is desirable to provide a purchase management apparatus, a purchase management method, a purchase management program and a storage medium storing a purchase management program that can make a notification to promote the purchase of the same item at appropriate time to a user who has purchased a new item.

### Solution to Problem

A purchase management apparatus according to one aspect of the present invention is a purchase management apparatus that makes a notification to promote purchase of an item to a user, the apparatus configured to be able to refer to a purchase history storage unit that stores user identification information identifying the user and purchase history records including item identification information identifying items purchased by the user and date of purchase in association with each other, and an item storage unit that stores the item identification information and category identification information identifying a category to which the items identified by the item identification information belong in association with each other, the apparatus including a target user identification information acquisition unit that acquires the user identification information of a target user being the user having purchased a first item purchased for first time among the items by referring to the purchase history storage unit, a purchase interval calculation unit that calculates a purchase interval of the items belonging to the category based on the purchase history record specified using the target user identification information among the purchase history records of the items belonging to the category specified using the category identification information associated with the item identification information of the first item by referring to the purchase history storage unit and the item storage unit, a purchase interval estimation unit that estimates a purchase interval of the first item based on the purchase interval calculated by the purchase interval calculation unit, and a notification unit that makes a notification to promote next purchase of the first item to the target user based on date of purchase of the first item and the purchase interval estimated by the purchase interval estimation unit.

In the purchase management apparatus according to one aspect of the present invention, the target user identification information acquisition unit acquires the user identification information of the target user being the user having purchased the first item, the purchase interval calculation unit calculates the purchase interval of the items belonging to the category based on the purchase history record specified using the target user identification information among the purchase history records of the items belonging to the category specified using the category identification information associated with the item identification information of the first item, the purchase interval estimation unit estimates the purchase interval of the first item based on the calculated purchase interval, and the notification unit makes a notification to promote next purchase of the first item to the target user based on the date of purchase of the first item and the estimated purchase interval. In this manner, even for the first item for which the purchase interval cannot be acquired, the purchase interval can be estimated on the basis of the known purchase history. It is thereby possible to give a user who has purchased a new item a notification to promote the purchase of the same item at appropriate timing.

In one embodiment, the purchase management apparatus may be configured to be able to further refer to a correlation storage unit that stores the category identification information and the category identification information of a correlated category being the category to which the item consumed concurrently with or used in relation to the item identified by the item identification information associated with the category identification information belongs in association with each other, and the purchase interval calculation unit may acquire the category identification information of the correlated category using the category identification information associated with the item identification information of the first item by referring further to the correlation storage unit, and calculate the purchase interval based on the purchase history record associated with the target user identification information among the purchase history records of the item identification information associated with the category identification information of the correlated category by referring to the purchase history storage unit and the item storage unit.

In this configuration, the purchase interval of the first item can be estimated using the purchase history of the target user of the item that belongs to the correlated category having a correlation with the category of the first item. It is thereby possible to estimate the unknown purchase interval with high accuracy on the basis of the known purchase interval.

In one embodiment, the purchase interval calculation unit may calculate the purchase interval based on the purchase history record associated with user identification information different from the target user identification information among the purchase history records of the items belonging to the category identified by the category identification information associated with the item identification information of the first item. In this configuration, the purchase interval of the first item can be estimated using the purchase history of the item belonging to the same category as the first item, of users different from the target user. It is thereby possible to estimate the unknown purchase interval with high accuracy on the basis of the known purchase interval.

In one embodiment, the purchase interval calculation unit may calculate the purchase interval using the purchase history records of a past specified period including the same time as timing of purchase of the first item. In this configuration, the purchase interval appropriately reflecting seasonal factors can be calculated.

In one embodiment, the purchase history storage unit may contain a purchase quantity of the item per purchase as the purchase history record, and the purchase interval estimation unit may estimate the purchase interval of the first item by adjusting the purchase interval calculated by the purchase interval calculation unit to be shorter or longer based on the purchase quantity. In this configuration, it is possible to estimate the unknown purchase interval with still higher accuracy on the basis of the known purchase interval.

A purchase management method according to another aspect of the present invention is a purchase management method executed by a purchase management apparatus configured to be able to refer to a purchase history storage unit that stores user identification information identifying a user and purchase history records including item identification information identifying items purchased by the user and date of purchase in association with each other, and an item storage unit that stores the item identification information and category identification information identifying a category to which the items identified by the item identification information belong in association with each other, the method including a target user identification information acquisition step of acquiring the user identification information of a target user being the user having purchased a first item purchased for first time among the items by referring to the purchase history storage unit, a purchase interval calculation step of calculating a purchase interval of the items belonging to the category based on the purchase history record specified using the target user identification information among the purchase history records of the items belonging to the category specified using the category identification information associated with the item identification information of the first item by referring to the purchase history storage unit and the item storage unit, a purchase interval estimation step of estimating a purchase interval of the first item based on the purchase interval calculated in the purchase interval calculation step, and a notification step of making a notification to promote next purchase of the first item to the target user based on date of purchase of the first item and the purchase interval estimated in the purchase interval estimation step.

A purchase management program according to another aspect of the present invention is a purchase management program causing a purchase management apparatus to operate, the apparatus configured to be able to refer to a purchase history storage unit that stores user identification information identifying a user and purchase history records including item identification information identifying items purchased by the user and date of purchase in association with each other, and an item storage unit that stores the item identification information and category identification information identifying a category to which the items identified by the item identification information belong in association with each other, as a target user identification information acquisition unit that acquires the user identification information of a target user being the user having purchased a first item purchased for first time among the items by referring to the purchase history storage unit, a purchase interval calculation unit that calculates a purchase interval of the items belonging to the category based on the purchase history record specified using the target user identification information among the purchase history records of the items belonging to the category specified using the category identification information associated with the item identification information of the first item by referring to the purchase history storage unit and the item storage unit, a purchase interval estimation unit that estimates a purchase interval of the first item based on the purchase interval calculated by the purchase interval calculation unit, and a notification unit that makes a notification to promote next purchase of the first item to the target user based on date of purchase of the first item and the purchase interval estimated by the purchase interval estimation unit.

A storage medium according to another aspect of the present invention is a storage medium storing a purchase management program causing a purchase management apparatus to operate, the apparatus configured to be able to refer to a purchase history storage unit that stores user identification information identifying a user and purchase history records including item identification information identifying items purchased by the user and date of purchase in association with each other, and an item storage unit that stores the item identification information and category identification information identifying a category to which the items identified by the item identification information belong in association with each other, as a target user identification information acquisition unit that acquires the user identification information of a target user being the user having purchased a first item purchased for first time among the items by referring to the purchase history storage unit, a purchase interval calculation unit that calculates a purchase interval of the items belonging to the category based on the purchase history record specified using the target user identification information among the purchase history records of the items belonging to the category specified using the category identification information associated with the item identification information of the first item by referring to the purchase history storage unit and the item storage unit, a purchase interval estimation unit that estimates a purchase interval of the first item based on the purchase interval calculated by the purchase interval calculation unit, and a notification unit that makes a notification to promote next purchase of the first item to the target user based on date of purchase of the first item and the purchase interval estimated by the purchase interval estimation unit.

The above-described purchase management method, the purchase management program and the storage medium have the same effects as those of the purchase management apparatus described above.

### Advantageous Effects of Invention

As described above, according to various aspects and embodiments of the present invention, it is possible to make a notification to promote the purchase of the same item at appropriate time to a user who has purchased a new item.

### Brief Description of Drawings

Fig. 1 a schematic configuration diagram of an item selling system including a purchase management apparatus according to an embodiment.
Fig. 2 a hardware configuration diagram of devices included in a purchase management apparatus according to an embodiment.
Fig. 3 is a functional block diagram of a purchase management apparatus according to a first embodiment.
Fig. 4 is one example of a table in a database server according to an embodiment.
Fig. 5 is a flowchart showing an operation of the purchase management apparatus according to the first embodiment.
Fig. 6 is a functional block diagram of a purchase management apparatus according to a second embodiment.
Fig. 7 is a flowchart showing an operation of the purchase management apparatus according to the second embodiment.

### Description of Embodiments

Embodiments of the present invention will be described with reference to the drawings. Note that, in the description of the drawings, the same elements will be denoted by the same reference symbols and redundant description will be omitted.

(First embodiment) A shopping server (purchase management apparatus) according to this embodiment makes a notification to promote the next purchase of an item once purchased to a user, and it is suitably used in an item selling system using the Internet, for example. The case where the shopping server according to this embodiment is used in the item selling system using the Internet is described hereinafter by way of illustration.

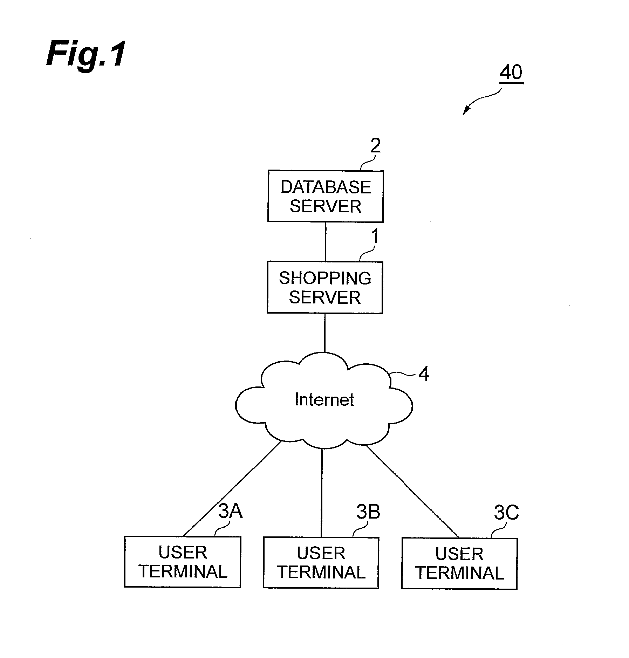

Fig. 1 a schematic configuration diagram of the item selling system including the shopping server according to this embodiment. As shown in Fig. 1, an item selling system 40 includes a shopping server 1, a database server 2, and user terminals. Note that the number of user terminals may be one or two or more. In this example, three user terminals 3A to 3C are shown for the sake of convenience. The functions of the user terminals 3A to 3C are identical, and the user terminal 3A is described as an example below. The shopping server 1 and the user terminal 3A are connected to the Internet and configured to be able to communicate with each other. Further, the shopping server 1 is configured to be able to refer to and update the database server 2.

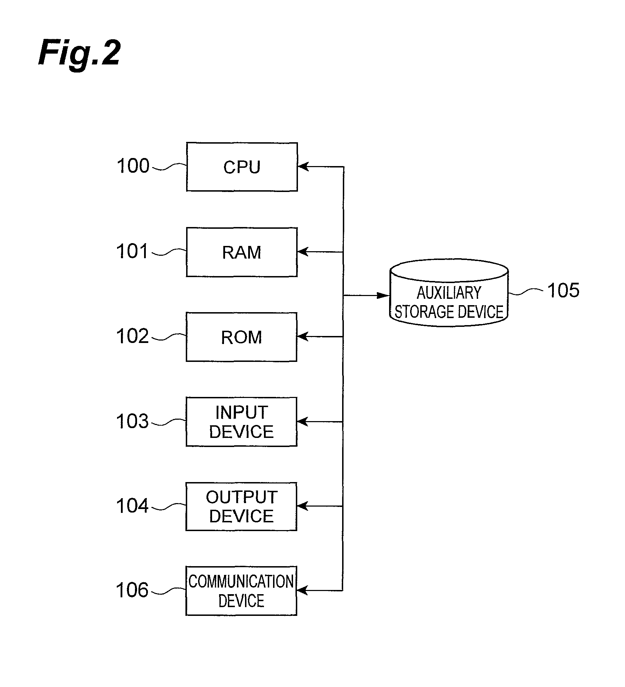

Fig. 2 a hardware configuration diagram of the shopping server 1, the database server 2 and the user terminal 3A. As shown in Fig. 2, the shopping server 1, the database server 2 and the user terminal 3A are physically configured as a typical computer system that includes a CPU (Central Processing Unit) 100, a main storage device such as a ROM (Read Only Memory) 101 and a RAM (Random Access Memory) 102, an input device 103 such as a camera or a keyboard, an output device 104 such as a display, an auxiliary storage device 105 such as a hard disk, a communication device 106 and the like. The respective functions of the shopping server 1, the database server 2 and the user terminal 3A described later are implemented by loading given computer software onto hardware such as the CPU 100, the ROM 101 and the RAM 102 to make the input device 103 and the output device 104 operate under control of the CPU 100 and perform reading and writing of data in the main storage device and the auxiliary storage device 105.

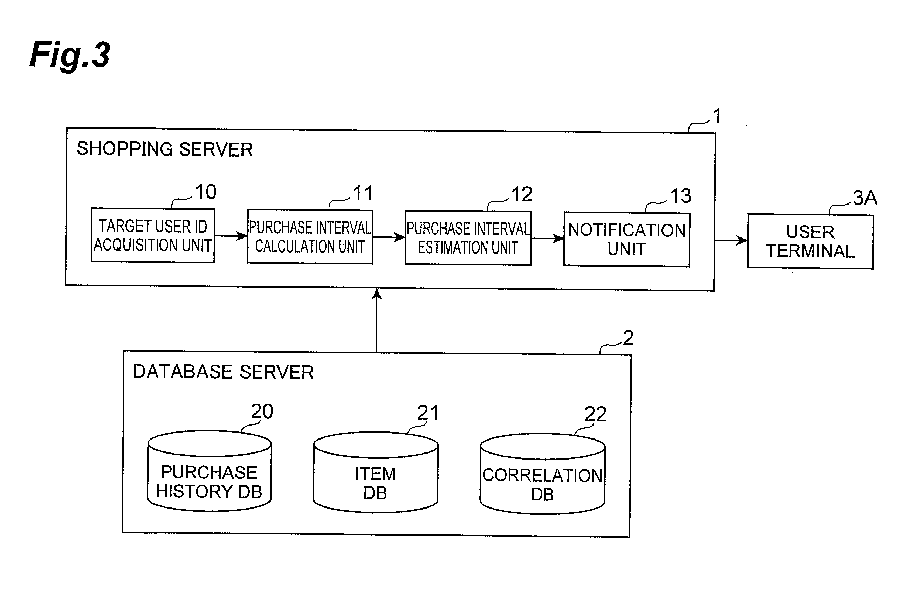

Fig. 3 is a functional block diagram of the shopping server 1 and the database server 2. As shown in Fig. 3, the database server 2 includes a purchase history DB (purchase history storage unit) 20, an item DB (item storage unit) 21, and a correlation DB (correlation storage unit) 22.

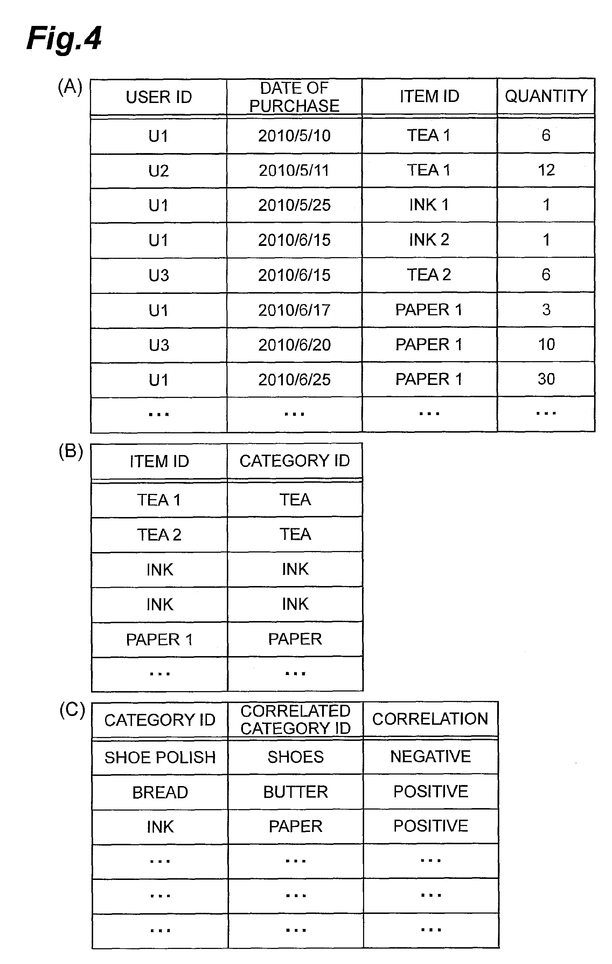

In the purchase history DB 20, a user and the purchase history of the user are stored in association with each other. The purchase history includes the item purchased by the user, the date of purchase, and the quantity of purchase per purchase. For example, as shown in Fig. 4(A), the purchase history DB 20 has a table in which a user ID (user identification information) that identifies a user, the date of purchase, an item ID that identifies an item, and the quantity of purchase are associated.

In the item DB 21, an item ID (item identification information) that identifies an item and a category ID (category identification information) that identifies a category to which the item belongs are stored in association with each other. For example, as shown in Fig. 4(B), the item DB 21 has a table in which the item ID and the category ID that identifies a category are associated. Note that the category is set in advance for categorizing the characteristics common to items and, an item name, a brand name, a generic term of an item or the like, for example, is used. As the category, a category that is classified in detail to narrow down to one item may be used or a category that is classified with the dominant conception to which many items belong may be used. For example, assume the case with "ink 1" that is red ink for printer A with a normal amount of ink, "ink 2" that is red ink for printer A with a double amount of ink, "ink 3" that is blue ink for printer A, and "ink 4" that is red ink for printer B. In this case, "red ink for printer A with a normal amount of ink" may be set as a category to which only "ink 1" belongs, "red ink for printer A" may be set as a category to which "ink 1" and "ink 2" belong, and "ink for printer" may be set as a category to which all of "ink 1" to "ink 4" belong.

In the correlation DB 22, a category ID that identifies a category and a correlated category ID that identifies a correlated category having a correlation with the category are stored in association with each other. For example, as shown in Fig. 4(C), the correlation DB 22 has a table in which the category ID, the correlated category ID that identifies a correlated category, and a correlation are associated. The correlated category is a category to which an item belongs that is consumed concurrently with or used in relation to the item that belongs to the category having a correlation. For example, shoe polish and shoes, bread and butter, ink and paper, notebook and pencil, sprinkles and rice, device and consumable (for example, humidifier and filter used for humidifier), sake and beer and the like. Note that, to the correlated category, an item that has been purchased by a target user a predetermined number of times or more (at least twice) belongs. Further, the correlation indicates the effects on the consumption of an item belonging to the correlated category when an item belonging to a certain category is consumed in the case where there is a correlated category having a correlation with a certain category. For example, when the correlation is "positive", it means that the more an item belonging to a certain category is purchased (consumed), the more an item belonging to a correlated category of that category is purchased (consumed) in a proportional manner. On the other hand, when the correlation is "negative", it means that the more an item belonging to a certain category is purchased (consumed), the less an item belonging to a correlated category of that category is purchased (consumed) in an inversely proportional manner. A specific constant of proportionality of correlation differs depending on each correlation. For example, when there is a relationship of the purchase of one ink for the purchase of three packs of printer paper, the constant of proportionality is three. In this case, if the purchase interval of printer paper is one month, three months, which is obtained by multiplying the purchase interval of printer paper, one month, by the constant of proportionality, three, is the purchase interval of printer ink. Further, the constant of proportionality of correlation may be set in advance. For example, a table in which the category ID, the correlated category ID, and the predetermined constant of proportionality of correlation are associated may be stored. Alternatively, a value calculated at specified timing using the purchase history DB 20, the item DB 21 and the correlation DB 23 may be used. Specifically, the purchased item ID and the purchased correlated item ID are acquired from the purchase history for each user by acquiring the item ID purchased by the same user from the purchase history DB 20 for each user, acquiring the category ID from the item DB 21 using the acquired item ID, acquiring the correlated category ID from the correlation DB 23 using the acquired category ID, and acquiring the item ID having a correlation (correlated item ID) from the item DB 21 using the correlated category ID. The constant of proportionality of correlation can be thereby obtained for each user. Then, the average value of the constants of proportionality of all users may be used as the constant of proportionality of correlation.

The shopping server 1 includes a target user ID acquisition unit (target user identification information acquisition unit) 10, a purchase interval calculation unit 11, a purchase interval estimation unit 12, and a notification unit 13. The target user ID acquisition unit 10 has a function of acquiring a user to which a notification to promote the next purchase of an item once purchased is to be made. For example, the target user ID acquisition unit 10 acquires the user ID to which a notification is to be made by referring to the purchase history DB 20 in which the purchase history records of users are stored. The target user ID acquisition unit 10 then selects a user who has purchased a first item that is purchased for the first time among items as a target user from users to which a notification to promote the next purchase of an item once purchased is to be made, and acquires the user ID (target user identification information) of the target user. To be specific, an item with no past purchase history record is the first item for the user having the purchase history. Therefore, one item is the first item for some users and not the first item for other users. The process of acquiring the target user ID is performed to distinguish between users who have purchased the same item a plurality of times and users who have purchased the first item among users to which a notification is to be made and estimate the purchase interval by different methods. Note that, for users who have purchased the same item a plurality of times among users to which a notification is to be made, the purchase interval of the item is obtained based on the purchase history of the item of the user stored in the purchase history DB 20 and then the timing of notification is calculated from the latest date of purchase of the item and the purchase interval of the item as in the method used hitherto. Hereinafter, the description of the hitherto known processing is omitted, and the processing related to target users is mainly described to facilitate understanding of the description. Note that the target user ID acquisition unit 10 outputs the acquired target user ID to the purchase interval calculation unit 11.

The purchase interval calculation unit 11 has a function of calculating the purchase interval based on the purchase history record specified using the target user ID among the purchase history records of the items belonging to the category specified based on the item ID of the first item. For example, the purchase interval calculation unit 11 acquires the category ID from the item DB 21 using the item ID of the first item of the target user and acquires the correlated category ID from the correlation DB 22 using the acquired category ID. It then acquires the correlated item ID from the item DB 21 using the acquired correlated category ID and acquires the purchase history records related to the correlated item of the target user ID from the purchase history DB 20 using the acquired correlated item ID. After that, the purchase interval calculation unit 11 calculates the purchase interval of the correlated item and then sets the average value of the purchase intervals of all correlated items belonging to the correlated category as the purchase interval in the correlated category.

Further, the purchase interval calculation unit 11 may calculate the purchase interval using the purchase history of a specific period, rather than calculating the purchase interval using the past purchase history. For example, the purchase interval calculation unit 11 may calculate the purchase interval using the purchase history during the past specified period including the same time as the timing of purchase of the first item. For example, when the timing of purchase of the first item is May, the purchase interval calculation unit 11 calculates the purchase interval using the purchase history in May of the last year. The purchase interval calculation unit 11 outputs the calculated purchase interval in the correlated category to the purchase interval estimation unit 12.

The purchase interval estimation unit 12 has a function of estimating the purchase interval of the first item based on the purchase interval in the category. For example, the purchase interval estimation unit 12 may estimate that the purchase interval of the first item coincides with the purchase interval in the correlated category. Further, the purchase interval estimation unit 12 may estimate the purchase interval of the first item by adjusting the purchase interval in the correlated category to be longer or shorter based on the purchase interval and the purchase history in the correlated category. As the purchase history, the purchase interval or the purchase quantity in a specific period is used.

The case of using the purchase interval in the correlated category during a specific period as the purchase history is described. The specific period is the past specified period including the same time as the purchase timing of the first item, and, if the purchase timing of the first item is July, the specific period is July of the last year, for example. When the purchase interval in the correlated category during the past same period (specific period) of the same target user is shorter than the average purchase interval of all periods, the purchase interval estimation unit 12 estimates the purchase interval in the correlated category which is adjusted to be shorter as the purchase interval of the first item. On the other hand, when the purchase interval in the correlated category during the past same period of the same target user is longer than the average purchase interval of all periods, the purchase interval estimation unit 12 estimates the purchase interval in the correlated category which is adjusted to be longer as the purchase interval of the first item. The adjustment is made by multiplying the purchase interval in the correlated category by a variable depending on the purchase interval, for example. In this manner, the purchase interval of the first item is estimated by taking seasonal factors into account.

Next, the case of adjusting the purchase interval using the purchase quantity in the correlated category as the purchase history is described. The purchase interval estimation unit 12 estimates, as the purchase interval of the first item, the purchase interval in the correlated category which is adjusted to be shorter as the purchase quantity of the correlated item having the positive correlation in the same target user increases. For example, in the case where printer paper (correlated category) and ink (category to which the first item belongs) have the positive correlation, when the purchase quantity of printer paper increases, the purchase interval of printer paper which is adjusted to be shorter is estimated as the purchase interval of the first item. The same applies to notebook and pencil, sprinkles and rice and the like. On the other hand, the purchase interval estimation unit 12 estimates, as the purchase interval of the first item, the purchase interval in the correlated category which is adjusted to be longer as the purchase quantity of the correlated item having the negative correlation in the same target user increases. For example, in the case where shoe polish (correlated category) and shoes (category to which the first item belongs) have the negative correlation, when the purchase quantity of shoe polish increases, the purchase interval of shoes which is adjusted to be longer is estimated as the purchase interval of the first item. The same applies to humidifier filter and humidifier, sake and beer and the like. The adjustment is made by multiplying the purchase interval in the correlated category by a variable depending on the purchase quantity and the correlation, for example. The purchase interval estimation unit 12 outputs the estimated purchase interval of the first item to the notification unit 13.

The notification unit 13 has a function of transmitting a notification to promote the next purchase of the first item based on the purchase interval of the first item. For example, the timing to make a notification is calculated based on the equation: (Next purchase timing of target user) = (This purchase timing of target user) + (Estimated purchase interval of first item). The notification unit 13 records the next purchase timing of the target user onto a notification list. The notification unit 13 then sends a notification to promote the next purchase of the first item to the user terminal 3A at specified timing based on the communication list. Note that a method of notification is not particularly limited, and any method such as via e-mail or display on a web browser may be used.

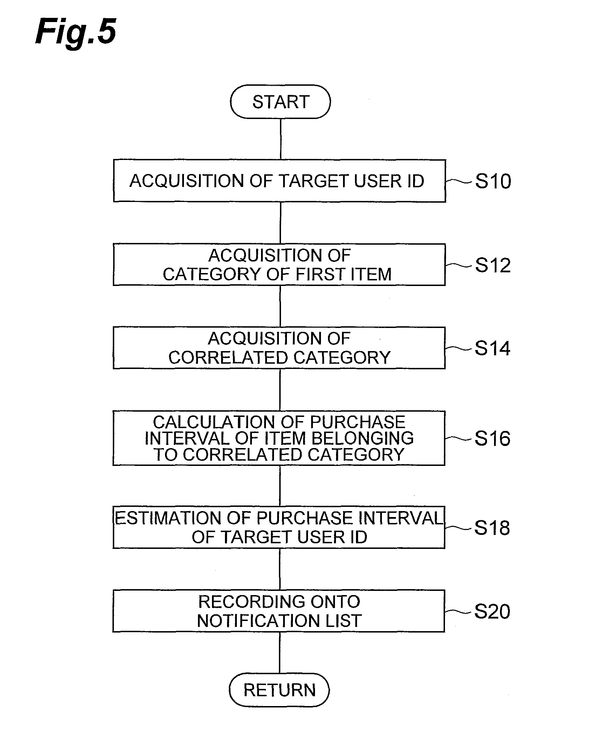

The operation of the shopping server 1 according to this embodiment is described hereinbelow. Fig. 5 is a flowchart showing the operation of the shopping server 1 according to this embodiment.

As shown in Fig. 5, the shopping server 1 starts with the acquisition of the target user ID (S10: target user identification information acquisition step). In the processing of S10, the target user ID acquisition unit 10 acquires the target user ID which has purchased the first item by referring to the purchase history DB 20. It is assumed in the following description that, in the table of the purchase history shown in Fig. 4(A), a user with the user ID "U1" has purchased "ink 2" for the first time. In other words, the case where the first item of the user U1 is "ink 2", and the user U1 is the target user (which is referred to hereinafter as the target user U1) is described. After the processing of S10 ends, the process proceeds to the acquisition of the category of the first item (S 12).

In the processing of S12, the purchase interval calculation unit 11 acquires the category to which the first item acquired in the processing of S10 belongs by referring to the item DB 21. The purchase interval calculation unit 11 acquires the category ID "ink" corresponding to the first item "ink 2" by referring to the item table shown in Fig. 4(B). After the processing of S12 ends, the process proceeds to the acquisition of the correlated category (S 14).

In the processing of S14, the purchase interval calculation unit 11 acquires the category having a correlation with the category acquired in the processing of S12 by referring to the correlation DB 22. The purchase interval calculation unit 11 acquires the correlated category ID "paper" corresponding to the category ID "ink" by referring to the correlation table shown in Fig. 4(C). After the processing of S 14 ends, the process proceeds to the calculation of the purchase interval (S16: purchase interval calculation step).

In the processing of S16, the purchase interval calculation unit 11 calculates the purchase interval in the correlated category acquired in the processing of S14 by referring to the item DB 21 and the purchase history DB 20. First, the purchase interval calculation unit 11 acquires the item "paper 1" that belongs to the correlated category ID "paper" by referring to the item table shown in Fig. 4(B). Next, the purchase interval calculation unit 11 acquires the purchase history records of the item "paper 1" of the target user U1 by referring to the purchase history table shown in Fig. 4(A). The purchase interval calculation unit 11 then acquires "2010/6/25" as the date of first purchase, acquires "2010/7/10" as the date of second purchase, and thereby acquires the purchase interval "8 days" of the item "paper 1". In the same manner, the purchase intervals are acquired for all items that belong to the category ID "paper" for the target user U1. Then, the average value of the all acquired purchase intervals is calculated and set as the purchase interval of the correlated category ID "paper". In this example, it is assumed that the average value is calculated as "15 days". After the processing of S16 ends, the process proceeds to the calculation of the purchase interval of the target user (S 18: purchase interval estimation step).

In the processing of S 18, the purchase interval estimation unit 12 calculates the purchase interval of the first item "ink 2" of the target user U1 based on the purchase interval in the correlated category which is calculated in the processing of S16 by referring to the purchase history DB 20. The average purchase interval "15 days" of the correlated category ID "paper" is calculated as it is as the purchase interval of the first item "ink 2" of the target user U1. After the processing of S 18 ends, the process proceeds to the recording onto the notification list (S20).

In the processing of S20, the notification unit 13 specifies the date of transmission by referring to the purchase history DB 20 and records it onto the notification list. The notification unit 13 acquires the date of purchase "2010/6/25" of the first item "ink 2" of the target user U1 which is acquired in the processing of S10, adds "15 days" which is calculated in the processing of S 18 to the date of purchase "2010/6/25" of the first item "ink 2", and records "2010/6/30" as the date of notification onto the notification list. After the processing of S20 ends, the control process shown in Fig. 5 ends.

The control process shown in Fig. 5 thereby ends. By executing the control process shown in Fig. 5, the purchase interval of the item that has been purchased only once is appropriately estimated based on the purchase interval in the correlated category. Then, a notification is made at the appropriate timing based on the notification list (notification step).

Note that, although the average purchase interval of the correlated category is calculated as it is as the purchase interval of the first item of the target user, the average purchase interval of the correlated category may be estimated to be longer or shorter according to the purchase interval or the purchase quantity during a specific period. Such examples are described hereinbelow.

In the case of using the purchase interval of a specific period, the average purchase interval of the correlated category ID "paper" during a specified period is calculated in the processing of S16. For example, the average purchase interval of the correlated category in June is calculated. Likewise, the average purchase interval in the same month of the previous year is calculated. Further, the average purchase interval of the correlated category ID "paper" during the whole period is calculated. Next, in the processing of S 18, when the average purchase interval of the correlated category ID "paper" in June of the last year is shorter than the average purchase interval of the correlated category ID "paper" during the whole period, the purchase interval is estimated to be shorter for the first item "ink 2" of the target user U1 in June of this year. For example, the average purchase interval of the correlated category ID "paper" in the same month of the previous year is divided by the average purchase interval of the correlated category ID "paper" during the whole period to calculate the ratio, and the average purchase interval of the correlated category ID "paper" is multiplied by the calculated ratio, thereby estimating the purchase interval to be shorter for the first item "ink 2" of the target user U1 in June of this year.

In the case of using the purchase quantity, the purchase interval estimation unit 12 acquires the amount of increase or decrease in the purchase quantity in the correlated category by referring to the purchase history DB 20. The purchase interval estimation unit 12 acquires the purchase quantity of the item "paper 1" of the target user U1 by referring to the purchase history table shown in Fig. 4(A). The purchase interval estimation unit 12 then acquires "3" as the purchase quantity for the first time and "30" as the purchase quantity for the second time. The purchase interval estimation unit 12 determines that the quantity increases or decreases when the amount of increase or decrease in the purchase quantity exceeds a threshold. For example, when the threshold is "5", because a difference between the first time and the second time is "27", the purchase interval estimation unit 12 determines that the purchase quantity of the correlated category ID "paper" increases. The purchase interval estimation unit 12 then acquires the correlation between the category ID "ink" and the correlated category ID "paper" as "positive" by referring to the correlation table shown in Fig. 4(C). In other words, they have the relationship that, when the purchase quantity of paper increases, the consumed quantity of ink increases. Therefore, the purchase interval is estimated to be short for the first item "ink 2" of the target user U1. For example, the consumed quantity of the category ID "ink" is divided by the consumed quantity of the correlated category ID "paper" to calculate a ratio, and the calculated ratio is stored in association with the category ID as a table in advance. Note that the above ratio may be calculated sequentially from the purchase history by referring to the purchase history DB 20. Then, the amount of increase in the purchase quantity of "paper" is multiplied by the ratio obtained by reference to the table or by sequential calculation, thereby obtaining the amount of increase in the consumed quantity of the category ID "ink". Using the amount of increase in the consumed quantity, the purchase interval can be estimated to be shorter than the average purchase interval of the correlated category. The same processing is performed also when the correlation is "negative", and the purchase interval can be estimated to be longer than the average purchase interval of the correlated category using the amount of increase in the consumed quantity.

A purchase management program that causes the shopping server 1 to function as the purchase management apparatus is described hereinafter.

The purchase management program includes a main module, an input module and a processing module. The main module is a part that exercises control over the processing. The input module causes the shopping server 1 to operate to acquire information from the user terminal 3A and the database server 2. The processing module includes an image acquisition module and an advertising information generation module. The functions implemented by executing the main module, the input module and the processing module are respectively equal to the functions of the target user ID acquisition unit 10, the purchase interval calculation unit 11, the purchase interval estimation unit 12 and the notification unit 13 of the shopping server 1 described above.

The purchase management program is provided via a storage medium such as ROM or a semiconductor memory, for example. Further, the purchase management program may be provided through a network as a data signal.

As described above, in the shopping server 1 according to the first embodiment, the target user ID acquisition unit 10 acquires the target user, which is a user who has purchased the first item, the purchase interval calculation unit 11 calculates the purchase interval based on the purchase history record specified using the target user ID among the purchase history records of the items belonging to the category specified using the category ID associated with the item ID of the first item, the purchase interval estimation unit 12 estimates the purchase interval of the first item based on the calculated purchase interval, and the notification unit 13 makes a notification to promote the next purchase of the first item to the target user based on the date of purchase of the first item and the estimated purchase interval. In this manner, even for the first item for which the purchase interval cannot be acquired, the purchase interval can be estimated on the basis of the known purchase history. It is thereby possible to give a user who has purchased a new item a notification to promote the purchase of the same item at appropriate timing. This allows a non-repeater to become a repeater of the item.

Further, in the shopping server 1 according to the first embodiment, the purchase interval of the first item can be estimated using the purchase history of the target user of the item that belongs to the correlated category having a correlation with the category of the first item. It is thereby possible to estimate the unknown purchase interval with high accuracy on the basis of the known purchase interval.

Furthermore, in the shopping server 1 according to the first embodiment, the purchase interval calculation unit 11 can calculate the purchase interval appropriately reflecting seasonal factors by calculating the purchase interval using the purchase history during the past specified period including the same time as the timing of purchase of the first item.

In addition, in the shopping server 1 according to the first embodiment, the purchase interval estimation unit 12 can estimate the unknown purchase interval with still higher accuracy on the basis of the known purchase interval by estimating the purchase interval of the first item by adjusting the purchase interval calculated by the purchase interval calculation unit 11 to be shorter or longer based on the purchase quantity.

(Second embodiment) The shopping server 1 according to a second embodiment is configured in substantially the same manner as the shopping server 1 according to the first embodiment, and a technique of estimating the purchase interval is different. Differences from the shopping server 1 according to the first embodiment are mainly described below, and redundant explanation is omitted.

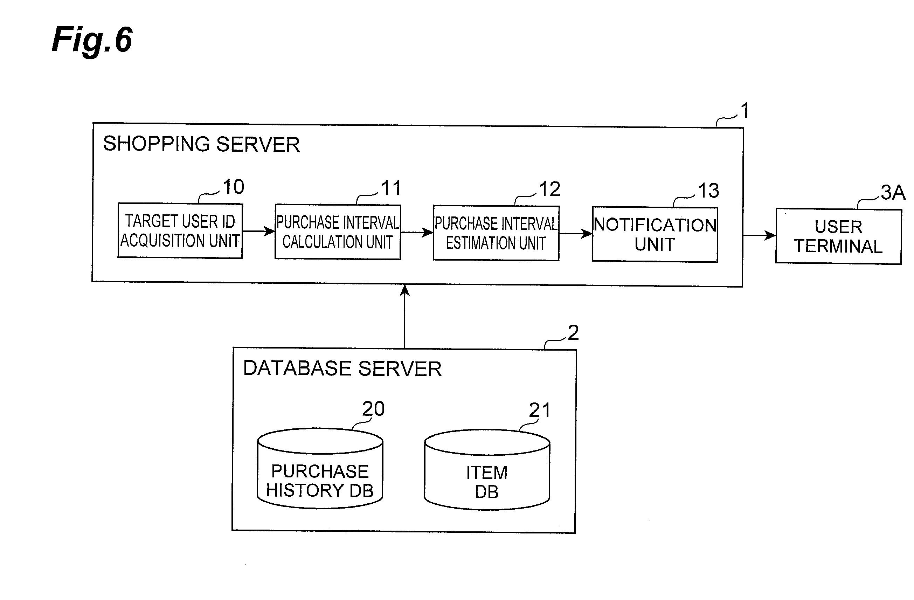

Fig. 6 is a schematic diagram showing the configurations of the shopping server 1 and the database server 2 according to the second embodiment. As shown in Fig. 6, the database server 2 includes the purchase history DB 20 and the item DB 21 and does not include the correlation DB 22. The shopping server 1 is substantially the same as the shopping server 1 according to the first embodiment, and some of the functions of the purchase interval calculation unit 11 and the purchase interval estimation unit 12 are different.

The purchase interval calculation unit 11 has a function of calculating the purchase interval based on the purchase history record specified using the target user ID among the purchase history records of the items belonging to the category specified based on the item ID of the first item. For example, the purchase interval calculation unit 11 acquires the category ID from the item DB 21 using the item ID of the first item, acquires the item ID belonging to the same category from the item DB 21 using the acquired category ID, and acquires the purchase history record of another user ID different from the target user ID from the purchase history DB 20 using the acquired item ID. The purchase interval calculation unit 11 then calculates the purchase interval of the item by another user based on the acquired purchase history. Then, it sets the average value of all purchase intervals as the purchase interval in this category.

Further, the purchase interval calculation unit 11 may calculate the purchase interval using the purchase history of a specific period, rather than calculating the purchase interval using the past purchase history. For example, the purchase interval calculation unit 11 may calculate the purchase interval using the purchase history in the past specified period including the same time as the timing of purchase of the first item. For example, when the timing of purchase of the first item is May, the purchase interval calculation unit 11 calculates the purchase interval using the purchase history in May of the last year. The purchase interval calculation unit 11 outputs the calculated purchase interval in the correlated category to the purchase interval estimation unit 12. The purchase interval calculation unit 11 outputs the calculated purchase interval in the category to the purchase interval estimation unit 12.

The purchase interval estimation unit 12 has a function of estimating the purchase interval of the first item based on the purchase interval in the category. For example, the purchase interval estimation unit 12 may estimate that the purchase interval of the first item coincides with the purchase interval in the category. Further, the purchase interval estimation unit 12 may estimate the purchase interval of the first item by adjusting the purchase interval in the category to be longer or shorter based on the purchase interval and the purchase history in the category. As the purchase history, the purchase interval or purchase quantity in a specific period is used.

The case of using the purchase interval in the category during a specific period as the purchase history is described. The specific period is the past specified period including the same time as the purchase timing of the first item, and, if the purchase timing of the first item is July, the specific period is July of the last year. When the purchase interval in the category during the past same period (specific period) of all users is shorter than the average purchase interval of all periods, the purchase interval estimation unit 12 estimates the purchase interval in the category which is adjusted to be shorter as the purchase interval of the first item. On the other hand, when the purchase interval in the category during the past same period of all users is longer than the average purchase interval of all periods, the purchase interval estimation unit 12 estimates the purchase interval in the category which is adjusted to be longer as the purchase interval of the first item. The adjustment is made by multiplying the purchase interval in the category by a variable depending on the purchase interval, for example. In this manner, the purchase interval of the first item is estimated by taking seasonal factors into account.

Next, the case of adjusting the purchase interval using the purchase quantity in the category as the purchase history is described. When the purchase quantity in the category during the past same period (specific period) of all users is larger than the average purchase quantity of all months in all users, the purchase interval estimation unit 12 estimates the purchase interval in the category which is adjusted to be shorter as the purchase interval of the first item. On the other hand, when the purchase quantity in the category during the past same period of all users is smaller than the average purchase interval of all periods, the purchase interval estimation unit 12 estimates the purchase interval in the category which is adjusted to be longer as the purchase interval of the first item. The adjustment is made by multiplying the purchase interval in the category by a variable depending on the purchase quantity, for example. In this manner, the purchase interval of the first item is estimated by taking seasonal factors into account.

The other configuration of the shopping server 1 according to the second embodiment is the same as that of the shopping server 1 according to the first embodiment.

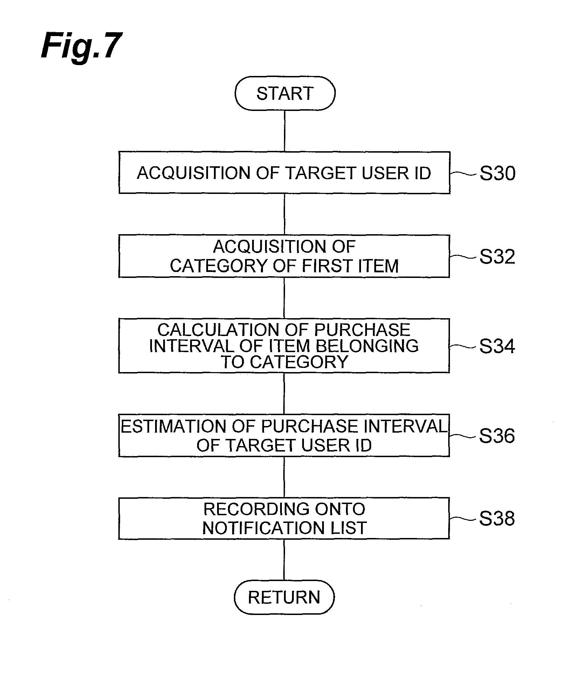

The operation of the shopping server 1 according to this embodiment is described hereinbelow. Fig. 7 is a flowchart showing the operation of the shopping server 1 according to this embodiment.

As shown in Fig. 7, the shopping server 1 starts with the acquisition of the target user ID (S30). This processing is the same as the processing of S 10 in Fig 5. Note that the case with the target user U1 and the first item "ink 2" is described just like in the first embodiment. After the processing of S30 ends, the process proceeds to the acquisition of the category of the first item (S32).

In the processing of S32, the purchase interval calculation unit 11 acquires the category to which the first item acquired in the processing of S30 belongs by referring to the item DB 21. This processing is the same as the processing of S12 in Fig 5. After the processing of S32 ends, the process proceeds to the acquisition of the category (S34).

In the processing of S34, the purchase interval calculation unit 11 calculates the purchase interval in the category acquired in the processing of S32 by referring to the item DB 21 and the purchase history DB 20. First, the purchase interval calculation unit 11 acquires the items "ink 1" and "ink 2" that belong to the category ID "ink" by referring to the item table shown in Fig. 4(B). Next, the purchase interval calculation unit 11 acquires the purchase history records of the items "ink 1" and "ink 2" purchased by users other than the user U1 by referring to the purchase history table shown in Fig. 4(A). It is assumed that there are users who have purchased the item "ink 1" or "ink 2" a plurality of times, other than the user U1, although not shown in Fig. 4(A). Under such conditions, the purchase intervals of the respective items are calculated from the purchase history records of the items "ink 1" and "ink 2" of users other than the user U1, the average value of the calculated purchase intervals is calculated and set as the purchase interval of the category ID "ink". It is assumed in this example that the average value is calculated as "15 days". After the processing of S34 ends, the process proceeds to the calculation of the purchase interval of the target user (S36).

In the processing of S36, the purchase interval estimation unit 12 calculates the purchase interval of the first item "ink 2" of the target user U1 based on the purchase interval in the category which is calculated in the processing of S34 by referring to the purchase history DB 20. The average purchase interval "15 days" of the category ID "ink" is calculated as it is as the purchase interval of the first item "ink 2" of the target user U1. After the processing of S36 ends, the process proceeds to the recording onto the notification list (S38).

In the processing of S38, the notification unit 13 specifies the date of transmission by referring to the purchase history DB 20 and records it onto the notification list. This processing is the same as the processing of S20 in Fig 5. After the processing of S38 ends, the control process shown in Fig. 7 ends.

The control process shown in Fig. 7 thereby ends. By executing the control process shown in Fig. 7, the purchase interval of the item that has been purchased only once is appropriately estimated based on the purchase interval in the category.

Note that, although the average purchase interval of the category is calculated as it is as the purchase interval of the first item of the target user, the average purchase interval of the category may be estimated to be longer or shorter according to the purchase interval or the purchase quantity during a specific period. Such examples are described hereinbelow.

In the case of using the purchase interval of a specific period, the average purchase interval of the category ID "ink" during a specified period is calculated in the processing of S34. For example, the average purchase interval of the category in June is calculated. Likewise, the average purchase interval in the same month of the previous year is calculated. Further, the average purchase interval of the category ID "ink" during the whole period is calculated. Next, in the processing of S36, when the average purchase interval of the category ID "ink" in June of the last year is shorter than the average purchase interval of the category ID "ink" during the whole period, the purchase interval is estimated to be shorter for the first item "ink 2" of the target user U1 in June of this year. For example, the average purchase interval of the category ID "ink" in the same month of the previous year is divided by the average purchase interval of the category ID "ink" during the whole period to calculate the ratio, and the average purchase interval of the category ID "ink" is multiplied by the calculated ratio, thereby estimating the purchase interval to be shorter for the first item "ink 2" of the target user U1 in June of this year.

In the case of using the purchase quantity, the purchase interval estimation unit 12 calculates the purchase quantity of the category ID "ink" during a specified period in the processing of S36. For example, the purchase quantity of the category in June is calculated. Likewise, the purchase quantity in the same month of the previous year is calculated. Further, the average purchase quantity of the category ID "ink" during the whole period is calculated. Next, in the processing of S36, when the purchase quantity of the category ID "ink" in June of the last year is larger than the average purchase quantity of the category ID "ink" during the whole period, the purchase interval is estimated to be shorter for the first item "ink 2" of the target user U1 in June of this year. For example, the purchase quantity of the category ID "ink" in the same month of the previous year is divided by the average purchase quantity of the category ID "ink" during the whole period to calculate the ratio, and the average purchase interval of the category ID "ink" is multiplied by the calculated ratio, thereby estimating the purchase interval to be shorter for the first item "ink 2" of the target user U1 in June of this year.

As described above, the shopping server 1 according to the second embodiment has the same effects as the shopping server 1 according to the first embodiment and can further estimate the purchase interval of the first item using the purchase history of the item belonging to the same category as the first item, of users different from the target user.

The above-described embodiments illustrate examples of the purchase management apparatus, the purchase management method, the purchase management program and the storage medium according to the present invention, and the present invention is not limited to the system, apparatus, method, program and storage medium according to the embodiments and may be altered or applied to those other than the above.

For example, although the shopping server 1 and the database server 2 are described as being different servers in the above-described embodiments, they may be implemented as a single server.

### Reference Signs List

1 ... shopping server (purchase management apparatus), 2...database server, 3A, 3B, 3C...user terminal, 10...target user ID acquisition unit, 11 ... purchase interval calculation unit, 12...purchase interval estimation unit, 13...notification unit, 20...purchase history DB (purchase history storage unit), 21...item DB (item storage unit), 22... correlation DB (correlation storage unit)

## Claims

1. A purchase management apparatus that makes a notification to promote purchase of an item to a user, the apparatus configured to be able to refer to
a purchase history storage unit that stores user identification information identifying the user and purchase history records including item identification information identifying items purchased by the user and date of purchase in association with each other, and
an item storage unit that stores the item identification information and category identification information identifying a category to which the items identified by the item identification information belong in association with each other, the apparatus comprising:
a target user identification information acquisition unit that acquires the user identification information of a target user being the user having purchased a first item purchased for first time among the items by referring to the purchase history storage unit;
a purchase interval calculation unit that calculates a purchase interval of the items belonging to the category based on the purchase history record specified using the target user identification information among the purchase history records of the items belonging to the category specified using the category identification information associated with the item identification information of the first item by referring to the purchase history storage unit and the item storage unit;
a purchase interval estimation unit that estimates a purchase interval of the first item based on the purchase interval calculated by the purchase interval calculation unit; and
a notification unit that makes a notification to promote next purchase of the first item to the target user based on date of purchase of the first item and the purchase interval estimated by the purchase interval estimation unit.

2. The purchase management apparatus according to Claim 1, the apparatus configured to be able to further refer to a correlation storage unit that stores the category identification information and the category identification information of a correlated category being the category to which the item consumed concurrently with or used in relation to the item identified by the item identification information associated with the category identification information belongs in association with each other, wherein
the purchase interval calculation unit acquires the category identification information of the correlated category using the category identification information associated with the item identification information of the first item by referring further to the correlation storage unit, and calculates the purchase interval based on the purchase history record associated with the target user identification information among the purchase history records of the item identification information associated with the category identification information of the correlated category by referring to the purchase history storage unit and the item storage unit.

3. The purchase management apparatus according to Claim 1, wherein the purchase interval calculation unit calculates the purchase interval based on the purchase history record associated with user identification information different from the target user identification information among the purchase history records of the items belonging to the category identified by the category identification information associated with the item identification information of the first item.

4. The purchase management apparatus according to any one of Claims 1 to 3, wherein the purchase interval calculation unit calculates the purchase interval using the purchase history records of a past specified period including the same time as timing of purchase of the first item.

5. The purchase management apparatus according to any one of Claims 1 to 4, wherein the purchase history storage unit contains a purchase quantity of the item per purchase as the purchase history record, and
the purchase interval estimation unit estimates the purchase interval of the first item by adjusting the purchase interval calculated by the purchase interval calculation unit to be shorter or longer based on the purchase quantity.

6. A purchase management method executed by a purchase management apparatus configured to be able to refer to a purchase history storage unit that stores user identification information identifying a user and purchase history records including item identification information identifying items purchased by the user and date of purchase in association with each other, and an item storage unit that stores the item identification information and category identification information identifying a category to which the items identified by the item identification information belong in association with each other, the method comprising:
a target user identification information acquisition step of acquiring the user identification information of a target user being the user having purchased a first item purchased for first time among the items by referring to the purchase history storage unit;
a purchase interval calculation step of calculating a purchase interval of the items belonging to the category based on the purchase history record specified using the target user identification information among the purchase history records of the items belonging to the category specified using the category identification information associated with the item identification information of the first item by referring to the purchase history storage unit and the item storage unit;
a purchase interval estimation step of estimating a purchase interval of the first item based on the purchase interval calculated in the purchase interval calculation step; and
a notification step of making a notification to promote next purchase of the first item to the target user based on date of purchase of the first item and the purchase interval estimated in the purchase interval estimation step.

7. A purchase management program causing a purchase management apparatus to operate, the apparatus configured to be able to refer to a purchase history storage unit that stores user identification information identifying a user and purchase history records including item identification information identifying items purchased by the user and date of purchase in association with each other, and an item storage unit that stores the item identification information and category identification information identifying a category to which the items identified by the item identification information belong in association with each other, as:
a target user identification information acquisition unit that acquires the user identification information of a target user being the user having purchased a first item purchased for first time among the items by referring to the purchase history storage unit;
a purchase interval calculation unit that calculates a purchase interval of the items belonging to the category based on the purchase history record specified using the target user identification information among the purchase history records of the items belonging to the category specified using the category identification information associated with the item identification information of the first item by referring to the purchase history storage unit and the item storage unit;
a purchase interval estimation unit that estimates a purchase interval of the first item based on the purchase interval calculated by the purchase interval calculation unit; and
a notification unit that makes a notification to promote next purchase of the first item to the target user based on date of purchase of the first item and the purchase interval estimated by the purchase interval estimation unit.

8. A storage medium storing a purchase management program causing a purchase management apparatus to operate, the apparatus configured to be able to refer to a purchase history storage unit that stores user identification information identifying a user and purchase history records including item identification information identifying items purchased by the user and date of purchase in association with each other, and an item storage unit that stores the item identification information and category identification information identifying a category to which the items identified by the item identification information belong in association with each other, as:
a target user identification information acquisition unit that acquires the user identification information of a target user being the user having purchased a first item purchased for first time among the items by referring to the purchase history storage unit;
a purchase interval calculation unit that calculates a purchase interval of the items belonging to the category based on the purchase history record specified using the target user identification information among the purchase history records of the items belonging to the category specified using the category identification information associated with the item identification information of the first item by referring to the purchase history storage unit and the item storage unit;
a purchase interval estimation unit that estimates a purchase interval of the first item based on the purchase interval calculated by the purchase interval calculation unit; and
a notification unit that makes a notification to promote next purchase of the first item to the target user based on date of purchase of the first item and the purchase interval estimated by the purchase interval estimation unit.
